(19) Europäisches Patentamt
European Patent Office
Office européen des brevets

(11) **EP 2 180 303 A2**

(12) **EUROPEAN PATENT APPLICATION**

(43) Date of publication:
    **28.04.2010 Bulletin 2010/17**

(51) Int Cl.:
    ***G01L 5/16*** (2006.01)     ***G01L 5/20*** (2006.01)
    ***G01M 17/10*** (2006.01)

(21) Application number: **09466024.8**

(22) Date of filing: **22.10.2009**

(84) Designated Contracting States:
    **AT BE BG CH CY CZ DE DK EE ES FI FR GB GR HR HU IE IS IT LI LT LU LV MC MK MT NL NO PL PT RO SE SI SK SM TR**
    Designated Extension States:
    **AL BA RS**

(30) Priority: **23.10.2008 CZ 20080657**

(71) Applicants:
    • **Culek, Bohumil**
      **25090 Nové Jirny (CZ)**

• **Malinský, Jiri**
  **14000 Praha 4 (CZ)**

(72) Inventors:
    • **Culek, Bohumil**
      **25090 Nové Jirny (CZ)**
    • **Malinský, Jiri**
      **14000 Praha 4 (CZ)**

(74) Representative: **Loskotová, Jarmila**
    **K Závetinám 727**
    **155 00 Praha 5 (CZ)**

(54) **System of measuring the power effects between vehicle wheel and rail in driving railway vehicle and method of measuring the power effects**

(57) For the measurement system of the force effects between the rail vehicle wheel and the rail with rail vehicle in movement, standard wheelset of rail vehicles serves as a measuring element with no need for its irreversible mechanical modifications. Measurement of the force effects between the rail vehicle wheel and the rail with rail vehicle in movement takes place in accordance with assumptions and steps given in the description.

The measurement system is mounted to the measured wheel's disc or, as the case may be, on its axle, the measuring elements, strain gauges are installed only on one side of the tested wheel's disc, their installation is not extremely demanding for accuracy, the undesirable spurious influences of temperature, centrifugal force, contact point position, longitudinal-tangential force, rippling of rail treads, and the like, are efficiently compensated for, the measurement system is applicable for rail carriages moving at a speed up to 250 km/hr, the accuracy of measurement system in the area of nominal and limit values of forces FQ and FY attains the values that are better than 2.5 %, the product is the L position of wheel-rail contact point in the wheel's tread width.

Fig. 10

**Description**

TheTechnical Field

The present invention relates to the force effects measurement method and system between the rail vehicle wheel and the rail with rail vehicle in movement.
The research of force effects measurement between the rail vehicle wheel and the rail with rail vehicle in movement is performed in order to verify safety against derailment (SAD) of rail vehicles.

The Prior Art

Hitherto developed principles for measurement of force effects between the rail vehicle wheel and the rail with rail vehicle in movement which make use of the measuring wheelsets to establish vertical forces and lateral forces operating between the rail vehicle wheel and the rail with rail vehicle in movement are based on a strain-gauge measurement of deformities to the rail vehicle wheel discs, for example

- the measurement system of national company of French National Railways (SNCF)
- Swedish system -Interfleet, GO1L 5/16 (2006.1) and GO1L 5/20 (2006.1) patents
- Italian system
- system of Czech Railways + Railway Research Institute CZ patent 278 639

or for measuring the wheelset axle deformities or, if appropriate, in combination with wheel disc distortion and wheelset axle distortion, for example

- German National Railways (DB)

The measured deformities are proportional to the forces present at the wheel-rail contact. Both principles vary in the placement of strain-gauge sensors and in the method of their electrical connection.
They result in measured electrical signals that, with amplified, adjusted and calibrated measurement system, represent forces operating between the rail vehicle wheel and the rail.

Disadvantages :

The German National Railways system is too complex.
The system of Czech Railways + VUZ is disadvantageous in the fact that electrical signals obtained from the distortion of rail vehicle wheel disc have improper shapes - fluctuating periodical behavior within wheel's turn which is inconvenient for further processing so that correction coefficient that smooths - balances, adapts - the signals must be introduced into measuring chain. In addition, the measuring wheelset of Czech Railways + VUZ requires adaptation of wheel naves - drilling the holes of 50 mm in diameter to intensify the force measurement sensitivity of the forces operating between the rail vehicle wheel and the rail.
Improvements of the existing principles and finding new principles to establish the forces operating between the rail vehicle wheel and the rail with regard to measurement accuracy or measurement uncertainty are subject to unceasing development.
In all cases of these systems the strain-gauges' connection methods are more or less successful in eliminating the negative effects of temperature changes, centrifugal force, electromagnetic field of outside environment, and other influences as, for instance, geometric inaccuracy in gluing the strain gauges. All of this causes the so far applied methods and systems for measuring the forces between wheels and rails to be inexact so there is a space for permanent research and development aiming at more perfect methods and systems of measurement.
In assessing SAD, the main criterion considered is a ratio of lateral FY forces and vertical FQ forces which operate between wheels and rails with vehicle in movement. Individual principles vary in the placement of strain-gauge sensors and in the method of their electrical connection. They result in measured electrical signals that, with amplified, adjusted and calibrated measurement system, represent FY and FQ forces. By applying these measurement systems, measuring wheelsets (MW) are formed that, after having been strapped under the newly built or reconstructed rail vehicles, they are used to verify their SAD under operational conditions. Improving and finding new principles to establish FY and FQ forces with regard to measurement accuracy or measurement uncertainty are subject to unceasing development.

The Nature of invention

The invention was aimed at developing both new system to measure force effects between the rail vehicle wheel and the rail and determining the contact point position in a tread width of the wheel of rail carriage with rail vehicle in movement.
The experimental research's result is a force effects measurement system between the rail vehicle wheel and the rail with rail vehicle in movement whose background is that what serves as a measuring element is the standard wheelset of rail vehicles with no need for their irreversible mechanical modifications.

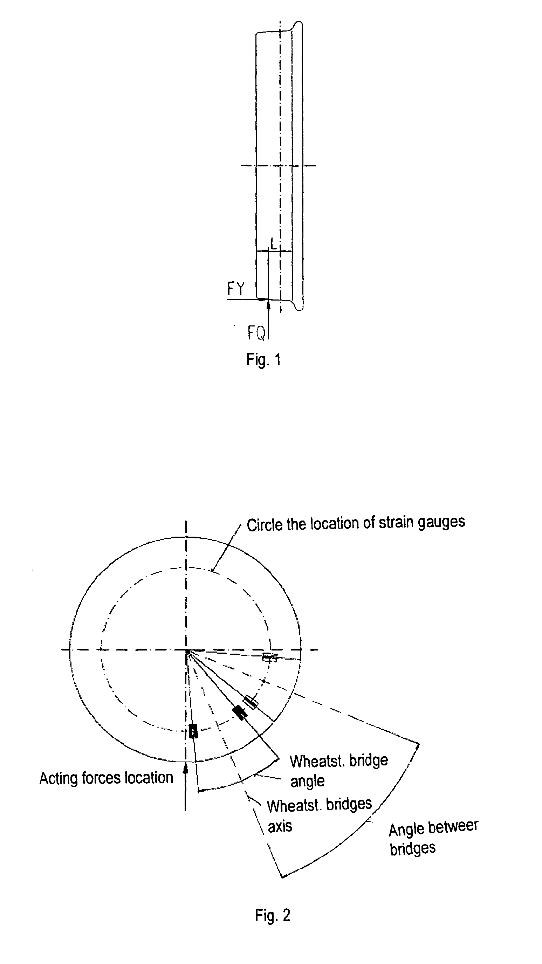

For *FQ* and *FY* forces acting on the rail wheel at a contact with rail in the point which is situated at a distance of L from the plane of matching circle inducing wheel disc's deformities. On the assumption that the deformities to wheel disc are present in the elastic deformities' area, the force of Hooke's law, the unambiguous dependence exists between deformities or the mechanical radial stress σ measured with strain gauges in the wheel disc (Fig. 2) and the values of quantities *FQ*, *FY* and *L*.

This dependence can be described using the relationship below:

$$\sigma = FQ * (a * L + b) + FY * c \qquad (1)$$

where:

$\sigma$ a       mechanical stress on rail wheel disc's surface in movement [MPa]
FQ       external vertical wheel force [kN]
FY       external lateral wheel force [kN]
L        contact point's shifting on a tread [mm]
a, b, c   constants.

The present invention's principle provides the establishment of three unknown quantities of FY, FQ, L and, additionally, the measurement of three values of mechanical stress $\sigma_1$, $\sigma_2$, $\sigma_3$ that are expressed by similar formulas (2) as relationship (1) while the condition of linear independence of the following formulas must be met.

$$\sigma_1 = FQ * (a_1 * L + b_1) + FY * c_1$$
$$\sigma_2 = FQ * (a_2 * L + b_2) + FY * c_2 \qquad (2)$$
$$\sigma_3 = FQ * (a_3 * L + b_3) + FY * c_3$$

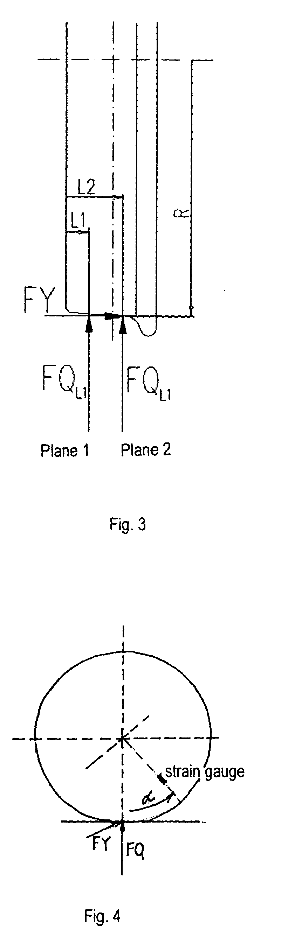

The linear independence condition is attained by suitable location of the strain-gauge sensors that will measure the stress $\sigma_1$, $\sigma_2$, $\sigma_3$. The constants $a_1$, $b_1$, $c_1$, $a_2$, $b_2$, $c_2$, $a_3$, $b_3$, $c_3$ shall be determined on the basis of the values of stress σ for various modes of loading by FQ, FY forces and L position under calibration.
Constants a, b, c can be established for one wheel position on the basis of the found values of stress σ that was induced by three different load values (see Fig. 3).

$$a = (\frac{\sigma_{L1}}{FQ_{L1}} - \frac{\sigma_{L2}}{FQ_{L2}})/(L_1 - L_2) \qquad (3)$$

$$b = \frac{\sigma_{L1}}{FQ_{L1}} - a * L_1 \qquad (4)$$

$$c = \frac{\sigma}{FY} \tag{5}$$

After assigning the measured values of stress $\sigma_1$, $\sigma_2$, $\sigma_3$, and knowing the constants $a_1$, $b_1$, $c_1$, $a_2$, $b_2$, $c_2$, $a_3$, $b_3$, $c_3$ it is possible to determine the on-line values of the present forces $FQ$ and $FY$ as well as the cross position of contact point $L$.

The result of measuring and on-line processing the measured values of stress $\sigma$ is solution of a set of equations (2) that is as follows:

$$FQ = \frac{\sigma_1 * K_{Q_1} + \sigma_2 * K_{Q_2} + \sigma_3 * K_{Q_3}}{b_1 * K_{Q_1} + b_2 * K_{Q_2} + b_3 * K_{Q_3}} \tag{6}$$

whereas

$$\begin{aligned} K_{Q_1} &= a_2 * c_3 - a_3 * c_2 \\ K_{Q_2} &= a_3 * c_1 - a_1 * c_3 \\ K_{Q_3} &= a_1 * c_2 - a_2 * c_1 \end{aligned} \tag{7}$$

or

$$FY = \frac{\sigma_1 * K_{Y_1} + \sigma_2 * K_{Y_2} + \sigma_3 * K_{Y_3}}{b_1 * K_{Y_1} + b_2 * K_{Y_2} + b_3 * K_{Y_3}} \tag{8}$$

whereas

$$\begin{aligned} K_{Y_1} &= a_2 * b_3 - a_3 * b_2 \\ K_{Y_2} &= a_3 * b_1 - a_1 * b_3 \\ K_{Y_3} &= a_1 * b_2 - a_2 * b_1 \end{aligned} \tag{9}$$

$$L = \frac{\sigma_1 - (c_1 * Y) - (b_1 * Q)}{(a_1 * Q)} \tag{10}$$

This new measurement principle of lateral wheel force FQ and vertical wheel force FY and position L of the contact point between rail wheel and rail in a tread width of the wheel of rail vehicle was experimentally verified on the Test device for rail wheels and with vehicle in movement in normal service.

Theoretical and experimental foundation

Using a special rail wheel test device which allows for the external loading forces to be introduced: FQ - vertical wheel force and FY - lateral wheel force in a contact juncture point between the "rotating rail" simulating movement along rail and the examined rail wheel put to test in optional point in the entire wheel's tread width, the mechanical stress behavior was measured with a strain gauge in selected places on wheel disc's surface.

Dependence was established of this mechanical stress σ on the quantities below:

- external vertical wheel force FQ

- external lateral wheel force FY

- displacement of tested wheel a

- shift of contact point, "rotating rail" and with the tested rail wheel, L in the wheel's tread width.

What was further detected was point influence as well as surface influence of the shape of A contact area of the present forces *FQ* and *FY* on the wheel disc's distortion response.
It was derived from the measured data that the mechanical stress behavior on the rail wheel disc's surface in radial direction at places sufficiently far from the tread (at least 30 % of wheel radius) can be expressed by relationship (1). The equations expressing mechanical stress onto the wheel disc surface in radial section of the measured rail wheel at three different radiuses / for its three different radiuses/ have form (2).
For measurement to be practical, the arrangement of strain-gauge sensors conforms to the following rules:

- Strain gauges are glued on one wheel's side
- Strain gauges pick up the wheel disc's deformities in radial direction
- Strain gauges are arranged on one circle
- Strain gauges placed on one circle ("pitch circle of strain gauges") form geometric structure
- Strain gauges connected into Wheatstone bridges must be arranged on wheel disc with a constant pitch $\Delta\varphi$ (for example, with 8 bridges, $\Delta\varphi = 45°$).
- Position (angle) of strain gauges in one Wheatstone bridge must be symmetrical to the bridge span angle's central line.
- 4 active strain gauges are connected in each bridge.

Arrangement structure, mutual position of strain gauges and their connection into Wheatstone bridges are selected in such a way that

- compensation is provided for the effects of centrifugal forces,
- compensation is provided for the impacts of temperature changes.

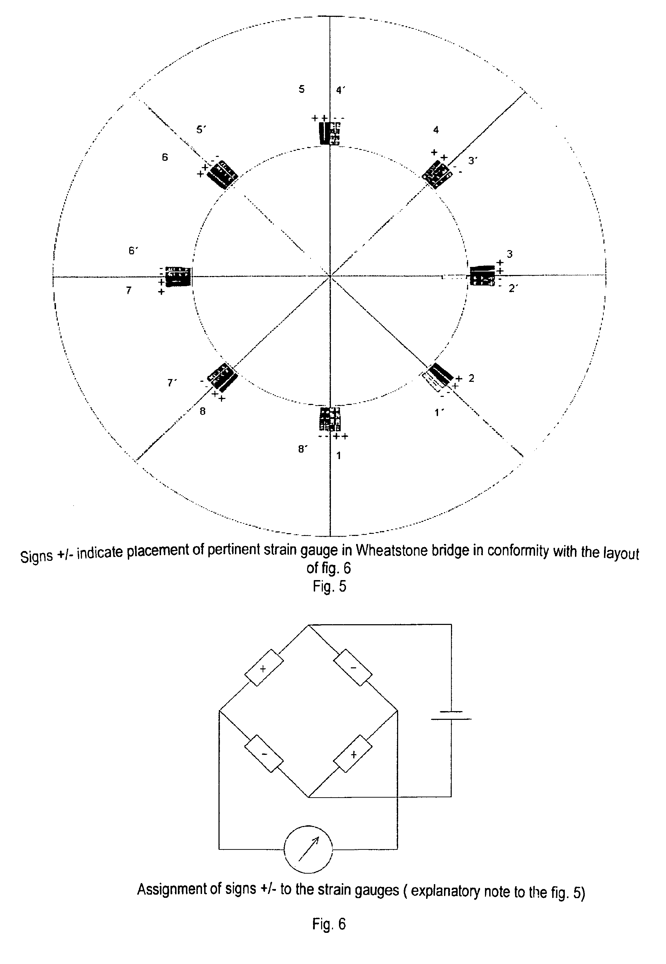

All of the strain gauges in a complete Wheatstone bridge are active and connected as depicted on Fig. 4 and 5. The stress on strain gauges in complete bridge changes identically with a change in temperature or centrifugal force and the impact of these effects is thus compensated for.
Computing program is used to draw up the arrangement of strain-gauge system on a wheel.
The input data for computing are:

- The strain gauge stresses that were established during calibration of one strain gauge. The wheel had been gradually acted upon using individual loading forces $FQ_{L1}$, $FQ_{L2}$ and *FY* (Fig. 3). The point of action is located in a range of $\alpha = 0 \ddot{o} 360°$ (Fig. 4).
- The layout of strain gauges on a wheel plate and the wiring diagram of strain gauges into complete bridges (example on Fig. 5).

The computing program allows for:

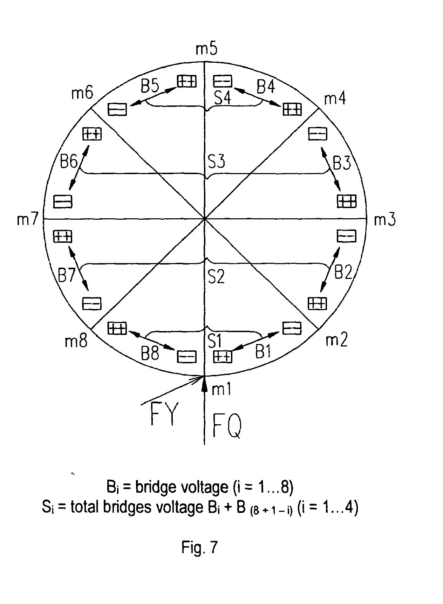

- Calculation of bridge voltage $B_i$ (see Fig. 7) with wheels loaded by forces $FQ_{L1}$, $FQ_{L2}$ and FY, for the position of contact point in interval $\alpha = 0° \ddot{o} 360°$.
- Calculation of the values of bridge voltage Si totals (see Fig. 7) with wheels loaded by forces $FQ_{L1}$, $FQ_{L2}$ and *FY*, for the position of contact point in interval $\alpha = 0° \ddot{o} 360°$.
- Calculation of the values of constants a, b, c based on relationships (3), (4) and (5).

The following applies for ideal system:

$$Q = FQ, \ Y = FY, \ (x = L)$$

where

Q, Y, x      are resultant quantities or their values calculated by the program
FQ, FY,L    are preset external quantities or their values.

The computing program is used for the selection of suitable arrangement of strain-gauge bridges. The criterion for this selection is a minimum sensitivity of signals $Q$ and $Y$ to the interference of signals $FQ$ and $FY$. This sensitivity shall be verified by calculation, namely through artificial introduction of bridge voltage deviation from its exact value.
This procedure is aimed at finding such an arrangement of strain gauges on the wheel plate with which the following conditions are met:

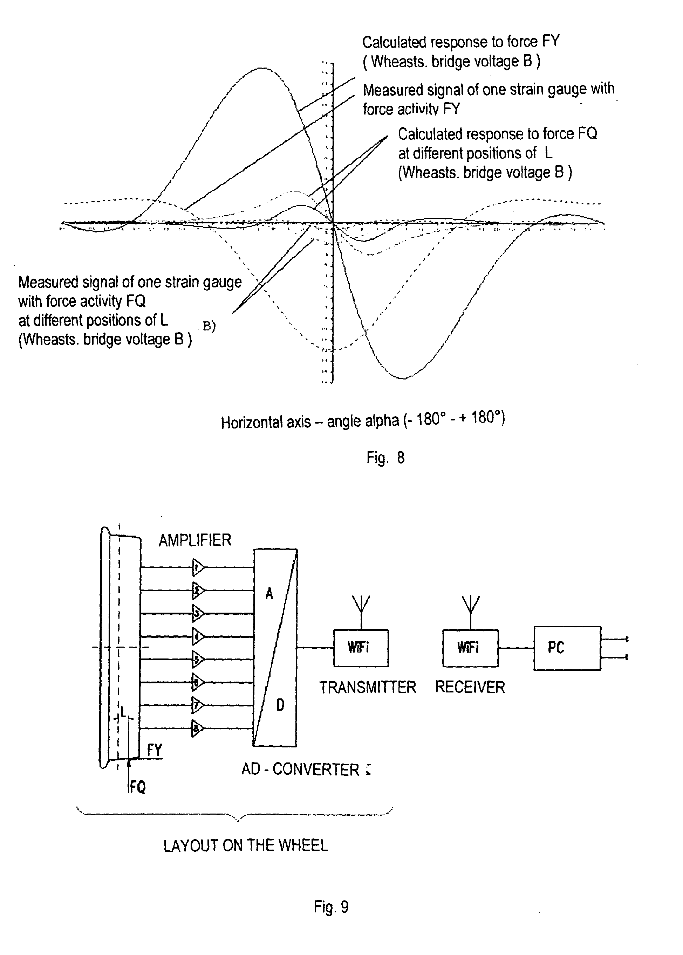

-    The system response shows sufficiently low sensitivity of individual strain gauges to interference for the nominal combinations of loading by forces $FQ$, $FY$ and the positions of contact point L (Fig. 8),
-    The bridge's output signal is strong enough for the signal to be processed (sufficient signal-to-noise ratio).

The decisive combination is such combination with which the limit values of observed parameters can be approached maximally in real measurement.
The result of the described computation analysis is:

-    Determination of the strain-gauge measurement system's position on wheel,
-    Determination of the values of weight coefficients V that will be used in calculating the values of $U_1$, $U_2$, $U_3$.

Calculation of values of $Q$ and $Y$ and position $L$

For calculating the values of signals $Q$ or $Y$ based on the solution for equation system (2), rather than using voltages $\sigma_1$, $\sigma_2$ and $\sigma_3$ a use is made of the trinity of voltage values of $U_{Q(Y)1}$, $U_{Q(Y)2}$, $U_{Q(Y)3}$ that are formed as linear combinations of voltages of the pairs of bridges $S_1$, $S_2$, $S_3$, $S_4$. For calculating the values of signals $Q$ or $Y$, a selection for one position of the point of action can be made of various trinities of voltage values of $U_{Q(Y)1v}$, $U_{Q(Y)2v}$, $U_{Q(Y)3v}$, the values of which are calculated on the basis of various independent linear combinations of voltage $S_1$, $S_2$, $S_3$, $S_4$. Therefore several values of $Q_v$, $Y_v$ ($v = 1...v_{max}$) can be calculated independently. Resultant values of $Q$ or $Y$ are then calculated as mean values

$$Q = \frac{1}{v_{max}} \sum_{v=1}^{v_{max}} Q_v \tag{11}$$

or

$$Y = \frac{1}{v_{max}} \sum_{v=1}^{v_{max}} Y_v \tag{12}$$

It generally applies that three values of $U_{Qrv}$ ($r$=1, 2, 3) are necessary to calculate one value of $Q$

$$U_{Qrv} = \sum_{i=1}^{4} V_{Qriv} * S_i \tag{13}$$

Or, three values of $U_{Yrv}$ ($r$=1, 2, 3) to calculate one value of $Y$

$$U_{Yrv} = \sum_{i=1}^{4} V_{Yriv} * S_i \tag{14}$$

Resultant value of $Q_v$ is given by equation

$$Q_v = \frac{U_{Q1v} * K_{Q1v} + U_{Q2v} * K_{Q2v} + U_{Q3v} * K_{Q3v}}{b_{UQ1v} * K_{Q1v} + b_{UQ2v} * K_{Q2v} + b_{UQ3v} * K_{Q3v}} \tag{15}$$

whereas $K_{Qrv}$ and $b_{UQrv}$ ($r$ =1, 2, 3) are constants.
Constants $K_{Qrv}$ ($r$ =1, 2, 3) are given by relationships

$$K_{Q1v} = a_{UQ2v} * c_{UQ3v} - a_{UQ3v} * c_{UQ2v}$$
$$K_{Q2v} = a_{UQ3v} * c_{UQ1v} - a_{UQ1v} * c_{UQ3v} \tag{16}$$
$$K_{Q3v} = a_{UQ1v} * c_{UQ2v} - a_{UQ2v} * c_{UQ1v}$$

whereas $a_{UQrv}$, $b_{UQrv}$, $c_{UQrv}$ are constants which pertain to voltages $U_{Qrv}$ ($r$ = 1, 2, 3).
Constants $a_{UQrv}$, $b_{UQrv}$, $c_{UQrv}$ are calculated as the weighed totals of constants $a_{Si}$, $b_{Si}$, $c_{Si}$ ($i$ = 1...4) that are multiplied by appropriate weight coefficients $V_{Qriv}$ ($r$= 1...3). Constants $a_{Si}$, $b_{Si}$, $c_{Si}$ pertain to signals $S_i$ for one measuring cross-section and they are established through calibration. Similarly, constants for other measuring cross-sections, that are a minimum of eight in number, are established during calibration.
Constants $a_{UQrv}$, $b_{UQrv}$, $c_{UQrv}$ are calculated by the following scheme:

$$a_{UQrv} = \sum_{i=1}^{4} V_{Qriv} * a_{Si} \tag{17}$$

$$b_{UQrv} = \sum_{i=1}^{4} V_{Qriv} * b_{Si} \tag{18}$$

$$c_{UQrv} = \sum_{i=1}^{4} V_{Qriv} * c_{Si} \tag{19}$$

Analogically to the calculation of values of $Q_v$, the resultant value of $Y_v$ is given by equation

$$Y_v = \frac{U_{Y1v} * K_{Y1v} + U_{Y2v} * K_{Y2v} + U_{Y3v} * K_{Y3v}}{b_{UY1v} * K_{Y1v} + b_{UY2v} * K_{Y2v} + b_{UY3v} * K_{Y3v}} \tag{20}$$

whereas

$$K_{Y1v} = a_{UY2v} * c_{UY3v} - a_{UY3v} * c_{UY2v}$$
$$K_{Y2v} = a_{UY3v} * c_{UY1v} - a_{UY1v} * c_{UY3v} \qquad (21)$$
$$K_{Y3v} = a_{UY1v} * c_{UY2v} - a_{UY2v} * c_{UY1v}$$

and

$$a_{UYrv} = \sum_{i=1}^{4} V_{Yriv} * a_{Siv} \qquad (22)$$

$$b_{UYrv} = \sum_{i=1}^{4} V_{Yriv} * b_{Si} \qquad (23)$$

$$c_{UYrv} = \sum_{i=1}^{4} V_{Yriv} * c_{Siv} \qquad (24)$$

In measuring wheelset, the resultant values of $Q$ or $Y$ are calculated as mean values from 4 values of $Q_v$ or $Y_v$.

$$Q = \frac{1}{4} \sum_{v=1}^{4} Q_v \qquad (25)$$

$$Y = \frac{1}{4} \sum_{v=1}^{4} Y_v \qquad (26)$$

Calibration of measuring wheelset wheels

The purpose of measuring wheelset wheels' calibration is determine the values for constants $a_{Sim}$, $b_{Sim}$, $c_{Sim}$ ($i$ =1...4 - number of bridge pair, m = 1...8 - number of measuring cross-section) which pertain to signals $S_i$ of the bridge pairs for individual measuring cross-sections.
When calibrated, individual wheels of measuring wheelset are loaded with forces the similar way as depicted on Fig. 3:

- With radial force $FQ$ that operates at a distance $L1$,
- With radial force $FQ$ that operates at a distance $L2$ (whereas $L1$ and $L2$ are distances of the contact point from the index plane),
- With lateral force $FY$ that operates at radius R.

Loading takes place during calibration in 8 positions only (if 8 strain-gauge bridges are glued) $\alpha$ = 0° to 315° with 45° increment.

Determination of constants a, b, c takes place in two steps that are based on equations (3), (4) , (5).

Constants a, b, c are established for each position by the following steps:

| Step | Loading | Edge condition | Equation |
|---|---|---|---|
| 1 | with radial force *FQ* at a distance *L1* <br><br> with radial force *FQ* at a distance L2 | *FY* = 0 | to assess constants a and b, equations (3) and (4) are used. <br><br> $$a = (\frac{\sigma_{L1}}{FQ_{L1}} - \frac{\sigma_{L2}}{FQ_{L2}})/(L_1 - L_2)$$ <br><br> $$b = \frac{\sigma_{L1}}{FQ_{L1}} - a * L_1$$ |
| 2 | with lateral force *FY*$_1$ and radial force <br> *FQ* at a distance *L1* <br> with lateral force *FY*$_2$ and radial force <br> *FQ* at a distance *L1* | *FQ* = const. <br><br> *FQ* > 0 | $$c = \frac{\sigma_1 - \sigma_2}{FY_1 - FY_2} \qquad (27)$$ |

The procedure as per Step 2 takes into account the fact that, in calibration state, it is not possible to implement the loading by force *FY* on condition of *FQ* = 0.

The result of calibration is a set of 96 constants $a_{Sim}$, $b_{Sim}$, $c_{Sim}$ (i = 1...4, k = 1...8) of the pairs of bridges $S_1$, $S_2$, $S_3$, $S_4$, each pair forms strain-gauge bridges arranged symmetrically on wheel disc whereas the normal line at contact point is the symmetry axis, for angles $\alpha$ = 0˚ to 315˚ with 45˚ increment (called position 1 to 8).

Identification of contact point position at wheel perimeter

It ensues from the previous text that knowledge of the contact point's position at wheel perimeter is a basic condition for this system's operation. Equality between signals $Q_v$ and value of *FQ* or, as the case may be, between $Y_v$ value of *FY* applies if the points of action of *FQ* and *FY* are located in measuring cross-section's plane. Position is determined from signals $Q_1$ to $Q_4$ based on the following conditions:

- max($|Q_v|_{v=1...4}$)-min($|Q_v|_{v=1...4}$)$\leq \Delta Q_{lim}$ difference between the maximum of absolute values of signals $Q_1$ to $Q_4$ and the minimum of absolute values of signals $Q_1$ to $Q_4$ is in the same instant of time than the stated limit value (in ideal case, the values of signals $Q_1$ to $Q_4$ are the same)
- simultaneously, it is a local extreme in the behavior of signals $|Q_v|_{v=1...4}$ in time (remark - this takes place only when the strain-gauge measurement system gets into position when two Wheatstone bridges whose signals add up are situated in a symmetrical position towards the point of action of FQ and FY.

Measurement process

Calculation of values of $S_{im}$ is performed on continuous basis, whereas i = 1...4, m = 1...8.

Based on $S_{im}$ values, values of calibration constants $a_{Sim}$, $b_{Sim}$, $c_{Sim}$ (i = 1...4, m = 1...8) and weight coefficients $V_{Qrvi}$ (r = 1...3 - equation's ordinal number), calculations are made for $U_{Qrim}$ values to be used for establishment of $Q_{vm}$ values (v = 1...4 - number of independently calculated value of Q) or, as the case may be, $U_{Yrim}$ values which are used for calculation of $Y_{vm}$ values (v = 1...4 - number of independently calculated value of Y).

In those wheel turning positions where the condition is met of a symmetry of Wheatstone bridges, that is, the contact point is located in measuring cross-section m, calculation is made for resultant values of $Q_m$ and $Y_m$. $Q_m$ value is calculated as a mean value of $Q_{vm}$ values (v = 1...4 - number of independently calculated value of Q , m = number of measuring cross-section) and $Y_m$ value as a mean value of $Y_{vm}$ values (v = 1...4 - number of independently calculated values of Y, m = number of measuring cross-section). Averaging is used to reduce the influence of errors in measuring.

Advantages:

- the measurement system is applicable for rail wheels of both driven and driving rail vehicles, respectively for all of the common, newly produced shapes - flat, conical as well as curved - of full wheel discs
- no irreversible modifications need not to be done to the measuring wheelset influencing wheelset's life and mechanical strength, for example, drilling and the like
- measuring elements, strain gauges, are installed only on one side of the tested wheel's disc, their installation is not extremely demanding for accuracy.
- the measurement system is mounted to the measured wheel's disc, alternatively, on its axle
- in most cases, a wheelset directly from the tested vehicle can be used for measurement
- the undesirable spurious influences such as temperature, centrifugal forces, positions of contact point, longitudinal-tangential force, rippling of rail treads, and so on, are effectively compensated for
- the measurement system is applicable for rail carriages moving at a velocity up to 250 km/hr
- the measurement system's accuracy in the area of nominal and limit values of F$\mathbf{Q}$ and F$\mathbf{Y}$ forces reaches better values than 2.5 %
- the product is L position of a wheel-rail contact point in the wheel's tread width.

Outline of the Figures in the Drawing

The invention is explained in detail on the attached drawings where

Fig. 1 depicts the rail vehicle wheel and its loading,
Fig. 2 depicts the strain-gauge measurement of mechanical radial stress σ in wheel disc,
Fig. 3 depicts the operation of forces during calibration,
Fig. 4 depicts strain gauge's position towards the point of action of *FQ, FY,*
Fig. 5 depicts the layout of strain gauges on the measured wheel's disc and the marking of strain gauges connected into one bridge 1 - 1[1], 2 - 2[1], 3 - 3[1], 4 - 4[1], 5 - 5[1], 6-6[1], 7-7[1], 8-8[1], whereas +/- signs indicate placement of pertinent strain gauge in Wheatstone bridge in conformity with the layout of strain gauges on the measured wheel's disc - see Fig. 6.,
Fig. 7 depicts the example of strain gauges' arrangement on wheel disc,
Fig. 8 graphically depicts the signal response of strain gauge or Wheatstone bridge to exterior loads which were calculated using computing simulation,
Fig. 9 depicts schematically the measuring chain,
Fig. 10 depicts the measurement system function.

Example of Embodiment of the Technical Solution

Each wheel of the measuring wheelset is fitted with one strain-gauge measurement system which consists of 8 complete Wheatstone strain-gauge bridges. Placement of the strain gauges and their arrangement (radius of "pitch circle" and bridge angle) were determined on the basis of computing simulation using the model described in previous points.
Strain gauges are glued with the following parameters :

- deviation from radius of "pitch circle" $\pm$ 1 mm
- deviation from theoretical position at the "pitch circle" measured in circumferential direction $\pm$ 1 mm (at a radius of 300 mm)
- angular deviation of strain gauge's position from the ideal radial position $\pm$ 1 ˚.

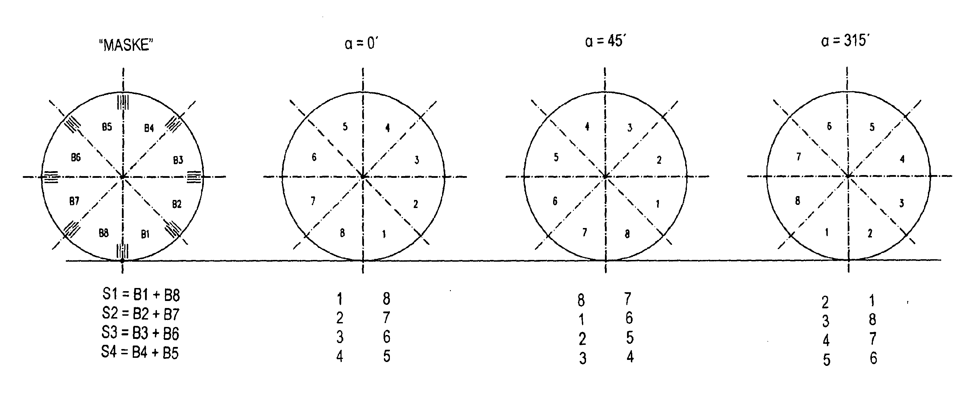

Measuring chain (Fig.9) installed on each wheel is, in addition to 8 Wheatstone strain-gauge bridges, fitted further with 8 low-noise bridging amplifiers (amplification adjustable for 600ö2400), one signal processor (100 MIPS) with one 12-bit AD converter ($f_s$= 4000 Hz/channel). Wireless transmission of digitalized data takes place via WiFi-System (2.4 GHz). Processor's software is written in C language. The whole system is designed so that it can be placed on wheel's nave or axle. The system is powered from batteries or, alternatively, through inductive power supply or a feed from alternator.
System function and method efficiency are depicted on Fig. 10.
The arrangement described and depicted on Fig. 5, 6, 7 may be looked upon as a "mask" that is permanently connected to the wheel-rail contact point. Wheatstone strain-gauge bridges no. 1 to no. 8 are placed on the turning wheel. 8. If and only if the position of strain-gauge bridges on a wheel gets identical to the "mask", the measurement system generates signals *Q* and *Y*. This occurs eight times in a single wheel turn.

Industrial Applicability

The invention will be utilized in verifying safety against derailment for new and reconstructed rail vehicles within the assent procedure for putting these vehicles into operation. It will be further employed by the rail vehicle manufacturers for their research activities in connection with the issue of improving the safety against derailment of rail vehicles they manufacture.

**Claims**

1. Measurement system for the force effects between the rail vehicle wheel and the rail with rail vehicle in movement, **characterized in that** the standard wheelset of rail vehicles serves as a measuring element with no need for its irreversible mechanical modifications

2. Measurement method for force effects between the rail vehicle wheel and the rail with rail vehicle in movement when forces *FQ* and *FY* acting upon the rail wheel at contact with rail in the point that is situated at distance *L* from matching circle's plane induce the stress in wheel disc and on the assumption that the deformities of rail wheel disc are present in the force area of Hooke's law, the dependence between radial stress σ on wheel disc's surface and values of quantities *FQ, FY* and *L* can be unambiguously expressed by relationship :

$$\sigma = FQ * (a * L + b) + FY * c \tag{1}$$

where:

| | |
|---|---|
| σ | radial mechanical stress on wheel disc's surface [MPa] |
| FQ | external vertical wheel force [kN] |
| FY | external lateral wheel force [kN] |
| L | contact point's shifting on a tread [mm] |
| a, b, c | constants established during calibration. |

takes place in the steps below
**First Step :**

Three values of mechanical stress $\sigma_1$. $\sigma_2$, $\sigma_3$ that are expressed by similar formulas (2) as relationship (1) shall be measured to establish three unknown quantities FY, FQ, L while the condition of linear independence of the following equations must be met:

$$\sigma_1 = FQ * (a_1 * L + b_1) + FY * c_1$$
$$\sigma_2 = FQ * (a_2 * L + b_2) + FY * c_2 \tag{2}$$
$$\sigma_3 = FQ * (a_3 * L + b_3) + FY * c_3$$

whereas the linear independence condition is attained by suitable location of the strain-gauge sensors that will measure the stress $\sigma_1$, $\sigma_2$, $\sigma_3$, and constants $a_1$, $b_1$, $c_1$, $a_2$, $b_2$, $c_2$, $a_3$, $b_3$, $c_3$ shall be determined
on the basis of the values of stress σ for various modes of loading by FQ, FY forces and L position under calibration, whereas
constants a, *b*, c can be established for one wheel position on the basis of the found values of stress σ that was induced by three different load values :

$$a = (\frac{\sigma_{L1}}{FQ_{L1}} - \frac{\sigma_{L2}}{FQ_{L2}})/(L_1 - L_2) \tag{3}$$

$$b = \frac{\sigma_{L1}}{FQ_{L1}} - a * L_1 \tag{4}$$

$$c = \frac{\sigma}{FY} \tag{5}$$

**Second Step :**

IAfter assigning the measured values of stress $\sigma_1$, $\sigma_2$, $\sigma_3$, and knowing the constants $a_1$, $b_1$, $c_1$, $a_2$, $b_2$, $c_2$, $a_3$, $b_3$, $c_3$ it is possible to determine the on-line values of the present forces $FQ$ and $FY$ as well as the cross position of contact point $L$,

then the result of measuring and on-line processing of measured values of stress $\sigma$ is the solution of a set of equations (2) that is as follows:

$$FQ = \frac{\sigma_1 * K_{Q_1} + \sigma_2 * K_{Q_2} + \sigma_3 * K_{Q_3}}{b_1 * K_{Q_1} + b_2 * K_{Q_2} + b_3 * K_{Q_3}} \tag{6}$$

whereas

$$K_{Q_1} = a_2 * c_3 - a_3 * c_2$$
$$K_{Q_2} = a_3 * c_1 - a_1 * c_3 \tag{7}$$
$$K_{Q_3} = a_1 * c_2 - a_2 * c_1$$

or

$$FY = \frac{\sigma_1 * K_{Y_1} + \sigma_2 * K_{Y_2} + \sigma_3 * K_{Y_3}}{b_1 * K_{Y_1} + b_2 * K_{Y_2} + b_3 * K_{Y_3}} , \tag{8}$$

whereas

$$K_{Y_1} = a_2 * b_3 - a_3 * b_2$$
$$K_{Y_2} = a_3 * b_1 - a_1 * b_3 \tag{9}$$
$$K_{Y_3} = a_1 * b_2 - a_2 * b_1$$

$$L = \frac{\sigma_1 - (c_1 * Y) - (b_1 * Q)}{(a_1 * Q)} \hspace{4cm} (10)$$

**Third Step:**

For measurement to be practical, the arrangement of strain-gauge sensors must conform to the following rules:

- strain gauges are glued on one wheel's side
- strain gauges pick up the wheel disc's deformities in radial direction
- strain gauges are arranged on one pitch circle of strain-gauges
- strain gauges placed on one pitch circle of strain gauges form geometric structure
- strain gauges connected into Wheatstone bridges must be arranged on wheel disc with a constant pitch $\Delta\varphi$ (for example, with 8 bridges, $\Delta\varphi = 45°$).
- to eliminate the influence of tangential forces the signals of bridge pairs in symmetrical position towards contact point add up
- position (angle) of strain gauges in one Wheatstone bridge must be symmetrical to the bridge span angle's central line.
- each Wheatstone bridge is usually composed of 4 strain gauges, all of the strain gauges are active,

whereas the arrangement structure, mutual position of strain gauges and their connection into Wheatstone bridges are selected in such a way that

- compensation is provided for the effects of centrifugal forces
- compensation is provided for the impacts of temperature changes

**Fourth Step**

Computing program is used to draw up the arrangement of strain-gauge system on a wheel, whereas the input data for calculation are:

- strain gauge stresses that were detected during calibration of one strain gauge when the wheel had been gradually acted upon using individual loading forces $FQ_{L1}$, $FQ_{L2}$ and $FY$
- the point of action is usually situated in a range of $\alpha = 0 \ddot{o} 180°$
- the layout of strain gauges on a wheel plate and the wiring diagram of strain gauges into complete Wheatstone bridges

and the computing program allow for:

- voltage calculation of Wheatstone bridges $B_i$ (see Fig. 7) with wheels loaded by forces $FQ_{L1}$, $FQ_{L2}$ and $FY$, for the position of contact point in interval $\alpha = 0° \ddot{o} 360°$.
- calculation of the values of Wheatstone bridge voltage totals of Si (see Fig. 7) with wheels loaded by forces $FQ_{L1}$, $FQ_{L2}$ and $FY$, for the position of contact point in interval $\alpha = 0° \ddot{o} 360°$.
- calculation of the values of constants a, b, c based on relationships (3), (4) and (5) if the following applies for ideal system:

$$Q = FQ, \; Y = FY, \; (x = L) \; ,$$

where

Q, Y, x .... are resultant quantities or their values calculated by the program
FQ, FY,L ... are preset external quantities or their values and

computing program shall be consequently used for the selection of suitable arrangement of strain-gauge bridges whereas the criterion for this selection is a minimum sensitivity of signals $Q$ and Y to the interference of signals $FQ$ and $FY$ when this sensitivity is verified by calculation, namely through artificial introduction of bridge voltage deviation from its exact value, whereas this procedure is aimed at finding such an arrangement of strain gauges on wheel plate under which the following conditions are met:

- the system response shows sufficiently low sensitivity of individual strain gauges to interference for the nominal combinations of loading by forces $FQ$, $FY$ and the positions of contact point $L$
- the bridge's output signal is strong enough for the signal to be processed (sufficient signal-to-noise ratio), whereas

the decisive loading combination is such combination with which the limit values of observed parameters can be approached maximally in real measurement while the computation analysis result is :

- determination of the strain-gauge measurement system's position on wheel,
- determination of the values of weight coefficients V that will be used in calculating the values of $U_1$, $U_2$, $U_3$

**Fifth Step**

Calculation of the values of $Q$ and $Y$ and position L when for calculation of the values of signals $Q$ or $Y$ based on the solution for equation system (2), rather than using voltages $\sigma_1$, $\sigma_2$ and $\sigma_3$ a use is made of the trinity of voltage values of $U_{Q(Y)1}$, $U_{Q(Y)2}$, $U_{Q(Y)3}$ that are formed as linear combinations of voltages of the pairs of bridges $S_1$, $S_2$, $S_3$, $S_4$, whereas for calculating the values of signals $Q$ or $Y$, a selection for one position of the point of action can be made of various trinities of voltage values of $U_{Q(Y)1v}$, $U_{Q(Y)2v}$, $U_{Q(Y)3v}$, the values of which are calculated on the basis of various independent linear combinations of voltage $S_1$, $S_2$, $S_3$, $S_4$, therefore independent calculation can be made for several values of $Q_v$, $Y_v$ ($v = 1...V_{max}$) and the resultant values of $Q$ or $Y$ are then calculated as mean values :

$$Q = \frac{1}{v_{max}} \sum_{v=1}^{v_{max}} Q_v \qquad (11)$$

or

$$Y = \frac{1}{v_{max}} \sum_{v=1}^{v_{max}} Y_v \qquad (12)$$

whereas it generally applies that three values of $U_{QIv}$ ($r = 1, 2, 3$) are necessary to calculate one value of $Q$

$$\qquad (13)$$

$$U_{Qrv} = \sum_{i=1}^{4} V_{Qriv} * S_i$$

or, three values of $U_{Yrv}$ ($r=1, 2, 3$) to calculate one value of Y

$$U_{Yrv} = \sum_{i=1}^{4} V_{Yriv} * S_i \qquad (14)$$

And resultant value of $Q_v$ is given by equation

$$Q_v = \frac{U_{Q1v} * K_{Q1v} + U_{Q2v} * K_{Q2v} + U_{Q3v} * K_{Q3v}}{b_{UQ1v} * K_{Q1v} + b_{UQ2v} * K_{Q2v} + b_{UQ3v} * K_{Q3v}} \qquad (15)$$

whereas $K_{Qrv}$ and $b_{UQrv}$ (r = 1, 2, 3) are constants that are given by relationships :

$$K_{Q1v} = a_{UQ2v} * c_{UQ3v} - a_{UQ3v} * c_{UQ2v}$$
$$K_{Q2v} = a_{UQ3v} * c_{UQ1v} - a_{UQ1v} * c_{UQ3v} \qquad (16)$$
$$K_{Q3v} = a_{UQ1v} * c_{UQ2v} - a_{UQ2v} * c_{UQ1v}$$

whereas $a_{UQrv}$, $b_{UQrv}$, $c_{UQrv}$ are constants which pertain to voltages $U_{Qrv}$ (r = 1, 2, 3), where constants $a_{UQrv}$, $b_{UQrv}$, $c_{UQvr}$ are calculated as the weighed totals of constants $a_{Si}$, $b_{Si}$, $c_{Si}$ (i = 1...4) that are multiplied by appropriate weight coefficients $V_{Qriv}$ (r = 1...3). Constants $a_{Si}$, $b_{Si}$, $c_{Si}$ pertain to signals $S_i$ for one measuring cross-section and they are established through calibration and, similarly, constants for other measuring cross-sections that are a minimum of eight in number are established during calibration, then constants $a_{UQrv}$, $b_{UQrv}$, $c_{UQrv}$ are calculated by the following scheme:

$$a_{UQrv} = \sum_{i=1}^{4} V_{Qriv} * a_{Si} \qquad (17)$$

$$b_{UQrv} = \sum_{i=1}^{4} V_{Qriv} * b_{Si} \qquad (18)$$

$$c_{UQrv} = \sum_{i=1}^{4} V_{Qriv} * c_{Si} \qquad (19)$$

And, analogically to the calculation of values of $Q_v$, the resultant value of $Y_v$ is given by equation

$$Y_v = \frac{U_{Y1v} * K_{Y1v} + U_{Y2v} * K_{Y2v} + U_{Y3v} * K_{Y3v}}{b_{UY1v} * K_{Y1v} + b_{UY2v} * K_{Y2v} + b_{UY3v} * K_{Y3v}} \qquad (20)$$

whereas

$$K_{Y1v} = a_{UY2v} * c_{UY3v} - a_{UY3v} * c_{UY2v}$$
$$K_{Y2v} = a_{UY3v} * c_{UY1v} - a_{UY1v} * c_{UY3v} \qquad (21)$$
$$K_{Y3v} = a_{UY1v} * c_{UY2v} - a_{UY2v} * c_{UY1v}$$

and

$$a_{UYrv} = \sum_{i=1}^{4} V_{Yriv} * a_{S\,iv} \qquad (22)$$

$$b_{UYrv} = \sum_{i=1}^{4} V_{Yriv} * b_{S\,i} \qquad (23)$$

$$c_{UYrv} = \sum_{i=1}^{4} V_{Yriv} * c_{S\,iv} \qquad (24)$$

In measuring wheelset, the resultant values of $Q$ or $Y$ are calculated as mean values from 4 values of $Q_v$ or $Y_v$.

$$Q = \frac{1}{4}\sum_{v=1}^{4} Q_v \qquad (25)$$

$$Y = \frac{1}{4}\sum_{v=1}^{4} Y_v \qquad (26)$$

Sixth Step

The purpose of measuring wheelset wheels' calibration is determine the values for constants $a_{Sim}$, $b_{Sim}$, $c_{Sim}$ ($i$ = 1...4 - number of bridge pair, $m$ = 1...8 - number of measuring cross-section) which pertain to signals $S_i$ of the bridge pairs for individual measuring cross-sections.
- when calibrated, individual wheels of measuring wheelset are loaded with forces the similar way, that is :

- with radial force $FQ$ that operates at a distance $L1$,
- with radial force $FQ$ that operates at a distance $L2$ (whereas $L1$ and $L2$ are distances of the contact point from the index plane),
- with lateral force $FY$ that operates at radius $R$,

whereas loading takes place during calibration in 8 positions only (if 8 strain-gauge bridges are glued) $\alpha$ = 0° to 315° with 45° increment
and determination of constants a, b, c takes place in two steps that are based on equations (3), (4) , (5), whereas constants $a, b, c$ are established for each position according to the following steps:

| Step | Loading | Edge condition | Equation |
|------|---------|----------------|----------|
| 1 | with radial force *FQ* at a distance *L1* with radial force *FQ* at a distance *L2* | *FY =0* | to assess constants a and b, equations (3) and (4) are used. $$a = (\frac{\sigma_{L1}}{FQ_{L1}} - \frac{\sigma_{L2}}{FQ_{L2}})/(L_1 - L_2)$$ $$b = \frac{\sigma_{L1}}{FQ_{L1}} - a * L_1$$ |
| 2 | with lateral force *FY*₁ and radial force *FQ* at a distance *L1* with lateral force *FY*₂ and radial force *FQ* at a distance *L1* | *FQ* = const. *FQ* > 0 | $$c = \frac{\sigma_1 - \sigma_2}{FY_1 - FY_2} \qquad (27)$$ |

whereas the procedure as per Step 2 takes into account the fact that, in calibration state, it is not possible to implement the loading by force *FY* on condition of *FQ* = 0 and the calibration result is a set of 96 constants $a_{Sim}$, $b_{Sim}$, $c_{Sim}$ (*i* = 1...4, *k* =1...8) of the pairs of bridges $S_1$, $S_2$, $S_3$, $S_4$ (each pair forms strain-gauge bridges arranged symmetrically on wheel disc whereas the normal line at contact point is the symmetry axis) for angles $\alpha$ = 0˚ to 315˚ with 45˚ increment (called position 1 to 8), whereas identification of the contact point position at wheel's perimeter is a basic prerequisite for this system's operation whereas the equality between signals $Q_v$ and value of *FQ* or, as the case may be, between $Y_v$ value of *FY* applies if the points of action of *FQ* and *FY* are located in measuring cross-section's plane. Position is determined from signals $Q_1$ to $Q_4$ based on the following conditions :

max($|Q_v|_{v=1...4}$)-min($|Q_v|_{v=1...4}$)$\leq\Delta_{lim}$ difference between the maximum of absolute values of signals $Q_1$ to $Q_4$ and the minimum of absolute values of signals $Q_1$ to $Q_4$ is in the same instant of time than the stated limit value (in ideal case, the values of signals $Q_1$ to Q4 are the same)
simultaneously, it is a local extreme in the behavior of signals $|Q_v|_{v=1...4}$ in time - this takes place only when the strain-gauge measurement system gets into position when two Wheatstone bridges whose signals add up are situated in a symmetrical position towards the point of action of FQ and FY,

to verify the calibration results, the calculation is executed continuously for $S_{im}$ values, whereas *i* =1...4, *m* =1...8 and, based on $S_{im}$ values, values of calibration constants $a_{Sim}$, $b_{Sim}$, $c_{Sim}$ (i = 1...4, *m* = 1...8) and weight coefficients $V_{Qrvi}$ (r =1...3 - equation's ordinal number), calculations are made for $U_{Qrim}$ values to be used for establishment of $Q_{vm}$ values (v = 1...4 - number of independently calculated value of Q) or, as the case may be, $U_{Yrim}$ values which are used for calculation of $Y_{vm}$ values (v =1...4 - number of independently calculated value of Y),
whereas
in those wheel turning positions where the condition is met of a symmetry of Wheatstone bridges, that is, the contact point is located in measuring cross-section m, calculation is made for resultant values of $Q_m$ and $Y_m$ . $Q_m$ value is calculated as a mean value of $Q_{vm}$ values *(v* = 1...4 - number of independently calculated value of *Q* , m = number of measuring cross-section) and $Y_m$ value as a mean value of $Y_{vm}$ values (*v* = 1...4 - number of independently calculated values *Y, m* = number of measuring cross-section), whereas averaging is used to reduce the influence of errors in measuring.

Fig. 1

Circle the location of strain gauges

Acting forces location

Wheatst. bridge angle

Wheatst. bridges axis

Angle betweer bridges

Fig. 2

Fig. 3

Fig. 4

Signs +/- indicate placement of pertinent strain gauge in Wheatstone bridge in conformity with the layout of fig. 6

Fig. 5

Assignment of signs +/- to the strain gauges ( explanatory note to the fig. 5)

Fig. 6

$B_i$ = bridge voltage (i = 1...8)
$S_i$ = total bridges voltage $B_i$ + $B_{(8+1-i)}$ (i = 1...4)

Fig. 7

Calculated response to force FY
( Wheasts. bridge voltage B )

Measured signal of one strain gauge with
force activity FY

Calculated response to force FQ
at different positions of L
(Wheasts. bridge voltage B )

Measured signal of one strain gauge
with force activity FQ
at different positions of L
(Wheasts. bridge voltage B )

B)

Horizontal axis – angle alpha (- 180° - + 180°)

Fig. 8

AMPLIFIER

A

D

WiFi

TRANSMITTER

WiFi

RECEIVER

PC

AD - CONVERTER

L

FY

FQ

LAYOUT ON THE WHEEL

Fig. 9

"MASKE"

$\alpha = 0°$

$\alpha = 45°$

$\alpha = 315°$

$S1 = B1 + B8$
$S2 = B2 + B7$
$S3 = B3 + B6$
$S4 = B4 + B5$